# EUROPEAN PATENT SPECIFICATION

(11) **EP 4 009 126 B1**
(45) Date of publication and mention of the grant of the patent: **08.05.2024**
(21) Application number: 20211977.2
(22) Date of filing: 04.12.2020
(51) Int. Cl.: G05B 23/02

(54) **METHOD OF OPERATING A MACHINE FOR A PRODUCTION FACILITY**
VERFAHREN ZUM BETRIEB EINER MASCHINE FÜR EINE PRODUKTIONSANLAGE
PROCÉDÉ DE FONCTIONNEMENT D'UNE MACHINE POUR UNE INSTALLATION DE PRODUCTION

(43) Date of publication of application: 08.06.2022
(73) Proprietor: United Grinding Group Management AG, 3014 Bern (CH)
(72) Inventor: PLÜSS, Christoph, 3400 Burgdorf (CH); DIERGARDT, Urs, 3006 Bern (CH); JOSI, Christian, 3612 Steffisburg (CH); KÖHNLEIN, Marcus, 8153 Rümlang (CH)
(74) Representative: Maiwald GmbH

(56) References cited:
- EP-A1- 2 969 360
- DE-A1-102008 021 607
- US-A1- 2015 177 734
- US-A1- 2018 046 869

## Description

### Field of the invention

The invention relates to a method of operating a machine for a production facility, in particular a machine tool, and a machine for a production facility, in particular a machine tool.

### Background of the invention

Operating a machine for a production facility requires actions performed by an operator. The amount of such actions depends, inter alia, on the degree of automation of the machine. Especially in the case of highly automated machines, operators have to perform many different tasks, such as maintenance of the machine or service work. In order to perform such tasks, the operators are provided with information characterizing an operating condition of the machine.

United States patent application US 2019/0308297 A1 discloses a method for determining an actual state of a machine tool, wherein a measuring device is arranged on the machine tool and comprises a structure-borne sound sensor. The measuring device determines an actual state of the machine tool on the basis of structure-borne sound signals. Further, the machine tool comprises an output unit to output a derived value such that in-process monitoring by an operator is possible.

Further, Chinese patent application CN 108015665 A discloses a mechanical grinder station anomaly detector. The anomaly detector acquires audio signals of machine running noise in real time, converts the audio signals into a digital signal, performs spectrum analysis and extracts an amplitude map and a frequency map. The mechanical grinder station anomaly detector further comprises a user interface to output the amplitude map, frequency map, and the audio signal.

European patent application EP 2 969 360 A1 discloses a simulator for facilitating virtual welding activity that includes speakers which allow a user to hear simulated welding-related and environmental sounds produced by the simulator.

United States patent application US 2018/0046869 A1 discloses a vehicle with four speakers and an inferred attentional system that is able to calculate the geo-location of a siren origin and emulate the siren inside of the vehicle.

Beyond that, DE 10 2008 021 607 A1 and US 2015/0177734 A1 disclose a method according to the preamble of claim 1.

However, it is still difficult for an operator to keep track of all the outputs regarding the actual state of a machine and to locate the parts of the machine that may need the attention of the operator.

### Summary of the invention

It is an object of the present invention to provide a method of operating a machine for a production facility that improves the presentation of a machine condition to an operator, in particular to simplify keeping track of outputs regarding the machine condition and locating parts of the machine that may need the attention of the operator. It is a further object of the present invention to present a machine for a production facility that improves the presentation of a machine condition to an operator.

In an aspect of the present invention, a method of operating a machine for a production facility that is adapted to produce an item is provided. Here, "operating" refers both to the regular operation of the machine, i.e., when the machine produces an item, and to maintenance and/or service work. Said maintenance and/or service work may be performed while the machine is running or when the machine is stopped.

The machine for the production facility may in principle be any kind of machine and is in particular a machine tool, e.g., a grinding tool. Also, the method may relate to the complete machine or just to parts of the machine.

The method comprises a step of obtaining at least one machine condition signal characterizing an operating condition of the machine. Said operating condition may be a normal or an abnormal operating condition of the machine.

The method further comprises a step of generating at least one audio signal representing the at least one machine condition signal. Said at least one audio signal is presented to an operator operating the machine. Audio signals do not require the operator to look at a display, therefore they directly catch the operator's attention, simplify keeping track of the operating condition of the machine and allow the operator to look at the machine while listening to the audio signal.

The method further comprises a step of assigning at least one relative position in space to the at least one audio signal. Here, the relative position in space may be a three-dimensional position and may be relative to the machine or to the operator.

The method further comprises a step of presenting the at least one audio signal to the operator such that it is deemed to emerge from the relative position in space assigned to the audio signal, i.e., a 3D audio effect is created. Hence, locating parts of the machine that may need the attention of the operator is simplified. The presentation of the audio signal to the operator such that it is deemed to emerge from said relative position in space may be performed using a stereo signal that is emitted from headphones or at least two speakers.

The at least one of the machine condition signals is a time-sequential signal, e.g., a vibration, a rotation or an oscillation. Said time-sequential signal may be a sound stemming, for example, from a grinding tool, from a drive shaft or from an actuator. Said time-sequential signal may also be an electric signal, stemming, e.g., from a fluctuation in currents. Further, the time-sequential signal may stem from fluctuations of sheet plates.

Moreover, the audio signal is generated from the time-sequential signal by a transformation of the time-sequential signal, e.g., by a shift and/or by scaling the frequencies of the time-sequential signal, in particular into the audible spectrum. That way, the operator can directly listen to the machine condition signal and therefore determine whether the machine is operating normally or abnormally. An experienced operator can even determine a likely cause for an abnormal machine behavior by listening to the transformed time-sequential signal.

In an example, the operator operates the machine in dependence on the audio signals presented to the operator. In particular, if the audio signals point to an abnormal behavior of the machine, the operator investigates the abnormal behavior of the machine and/or stops the machine in order to prevent damage to the machine due to the abnormal behavior.

In an example, the time-sequential signal is analyzed and characteristics of the time-sequential signal that identify behavior of the machine are transformed such that the operator can more easily recognize them. Such transformation may, e.g., be an amplification of the characteristics of the time-sequential signal that identify behavior of the machine. By amplifying said characteristics, they are more prominent to the operator and therefore the operator's attention is drawn to them. Also, by amplifying the characteristics that identify behavior of the machine, it is easier to distinguish abnormal behavior from normal behavior of the machine. The analysis to identify the characteristics that identify behavior of the machine may, for example, include a subtraction of a known time-sequential signal for normal behavior of the machine from the time-sequential signal.

In an example, at least one of the machine condition signals is analyzed and characteristic machine condition events, in particular machine condition sound events, are separated from one another. The separation may, for example, be based on sound signals obtained from different microphones. Once the characteristic machine condition events are separated from one another, it is easier for the operator to focus on one of the machine condition events at a time.

In an example, at least one of the machine condition signals is analyzed and the audio signal representing said machine condition signal is chosen from a sound database, based on the result of the analysis of said machine condition signal. An audio signal chosen from a sound database is particularly useful when the machine condition signal is not an audible signal and cannot be transformed into an audible signal. In that case, the audio signal chosen from the sound database may inform the operator about normal or abnormal behavior of the machine. The sound database may be allocated to the machine, may be a central database for the production facility or may be in a decentral system, e.g. in a cloud.

In an example, the sound database contains a plurality of event sounds, wherein each event sound is mapped to a machine operating condition, e.g., a notification, an alert, a warning or an alarm. Hence, when the operator hears a certain event sound, he will know what machine operating condition it corresponds to and will operate the machine accordingly. The operator may also train the mapping of event sounds to machine operating conditions by providing feedback to the respective event sounds.

In an example, the relative position in space assigned to the audio signal corresponds to the position in space where the machine condition signal that is represented by the audio signal originates. Hence, the operator can locate an abnormally operating machine part by listening to the audio signals. This has the further advantage that the operator can observe the machine when looking for a fault instead of having to look at a display.

In an example, a position and/or orientation of the operator is determined and the relative positions in space assigned to the audio signals are chosen relative to said position and/or orientation of the operator. That way, the operator receives personalized audio signals that allow him to easily locate the position of a fault or of a machine part that operates abnormally. The position of the operator may be determined by a camera, by a proximity sensor or by a unit worn by or attached to the operator, such as a wireless communication unit or a radio frequency identification unit. The orientation of the operator may be determined by a camera, by dynamic head tracing, e.g., with headphones, or by determining the viewing direction of the operator, e.g., with smart glasses.

In an example, one or more of the audio signals are highlighted by placing their relative positions in space closer to the operator. On one hand, such placement of the relative positions of the audio signals will amplify said audio signals, which alerts the operator. On the other hand, more attention is paid to an audio signal being close by compared to an audio signal being far away.

In an example, the at least one audio signal is presented to the operator when the operator is located in the vicinity of the machine. That way, only a selection of audio signals is presented to the operator, making it easier to identify specific audio signals. Also, the operator is already in the vicinity of the machine when he receives the audio signal and can therefore directly operate said machine, e.g. by servicing it. Alternatively, the at least one audio signal is presented to the operator when the operator is located at a distance from the machine or when the operator is located at a remote location. That way, the operator can listen to audio signals representing the machine condition without having to be close to the machine. This is particularly useful when it is unsafe to be located close to the machine or when one highly trained operator is asked to find a fault in a remotely located machine.

In another aspect of the present invention, a machine for a production facility that is adapted to produce an item is provided. Said machine may in principle be any kind of machine and is in particular a machine tool, e.g., a grinding tool.

The machine comprises at least one machine condition detection unit for obtaining a machine condition signal characterizing an operating condition of the machine. Said operating condition may be a normal or an abnormal operating condition of the machine.

The machine further comprises at least one audio signal generation unit for generating an audio signal representing the machine condition signal and at least one audio transmission unit for transmitting the audio signal to an operator operating the machine. The audio signal generation unit may be a central unit. Alternatively, there may be one audio signal generation unit per machine or the audio signals may be generated in a decentral system, e.g., a cloud. The audio transmission unit may comprise, for example, headphones or at least two speakers. Audio signals do not require the operator to look at a display, therefore they directly catch the operator's attention, simplify keeping track of the operating condition of the machine and allow the operator to look at the machine while listening to the audio signal.

The machine is operated according to the method described above and features the advantages described above.

It shall be understood that a preferred embodiment of the invention can also be any combination of the dependent claims with the respective independent claim.

These and other aspects of the invention will be apparent from and elucidated with reference to the embodiments described hereinafter.

### Brief description of the drawings

In the following, preferred embodiments of the invention will be described, by way of example only, and with reference to the drawings in which:
- Fig. 1: shows a schematic top view of a production facility and
- Fig. 2: shows a flowchart of a method of operating a machine for a production facility.

### Detailed description of embodiments

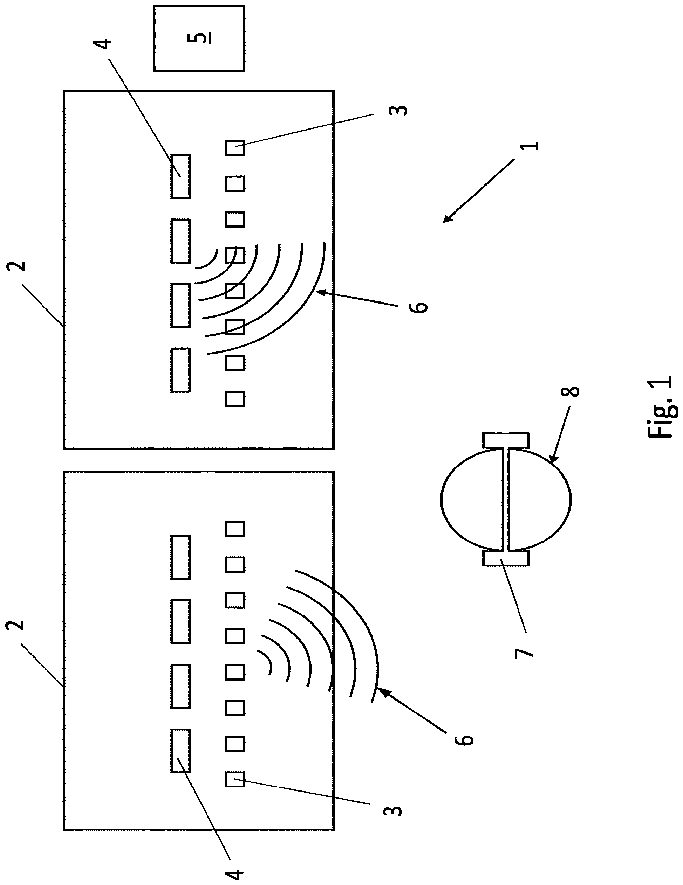

Figure 1 shows a schematic top view of a production facility 1 comprising two machines 2. The machines 2 may be machine tools, e.g., grinding tools, but may also be any other kind of machine.

The machines 2 each comprise a plurality of microphones 3 and other sensors 4 such as electric sensors, mechanical sensors, temperature sensors or machine specific sensors. The microphones 3 and other sensors 4 obtain machine condition signals that characterize an operating condition of the machine 2.

The production facility 1 further comprises an audio signal generation unit 5 which receives the machine condition signals from the microphones 3 and other sensors 4. In the example shown in Figure 1, the machine condition signal of one of the microphones 3 points to an out-of-the-norm-behavior of the machine 2. Therefore, the audio signal generation unit 5 generates an audio signal 6 representing said machine condition signal. Also, the machine condition signal of one of the other sensors 4 points to an out-of-the-norm-behavior of the machine 2. Therefore, the audio signal generation unit 5 also generates an audio signal 6 representing the machine condition signal of the other sensor 4.

The audio signals 6 are generated such that they deem to emerge from the position in space where the machine condition signal that is represented by the audio signal 6 originates, i.e., a 3D audio effect is created.

The production facility 1 further comprises an audio transmission unit 7, which is depicted in Figure 1 as headphones worn by an operator 8.

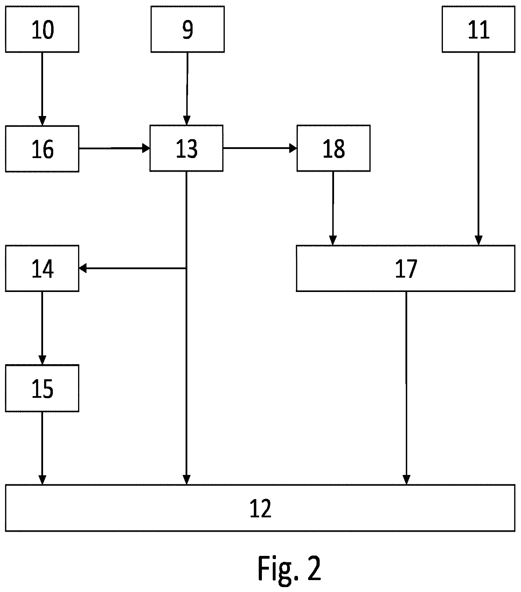

Figure 2 shows a flowchart illustrating a method of operating the machine 2 for the production facility 1.

Several different types of machine condition signals characterizing an operating condition of the machine 2 are obtained: sound signals 9, time-sequential signals 10 and other events 11.

The sound signals 9 are usually picked up by a microphone 3. The sound signals 9 may fit just fine to be directly presented 12 to the operator 8 such that the sound signals 9 deem to emerge from a position in space that corresponds to the position in space where the machine condition signal originates. In general, however, the sound signals 9 have to be processed 13 before being presented to the operator 8. Such processing 13 may include amplifying, diminishing, shifting the frequencies or scaling the frequencies.

Alternatively, the processed 13 sound signals 9 may undergo a spatial sound analysis 14 which separates characteristic sound events from each other. In a subsequent spatial sound synthesis 15, locations in space are assigned to the characteristic sound events and the resulting sound is presented 12 to the operator 8.

Time-sequential signals 10 are signals that vary over time but are not sound signals 9. Such time-sequential signals 10 are first transformed 16 into sound signals and then further processed 13 as if they were sound signals 9.

Other events 11 may include, for example, temperature signals, warnings and/or alerts. These are signals that cannot be transformed into sound signals. However, in order to present 12 said other events 11 to the operator 8, the other events 11 are mapped 17 to event sounds stored in a database. For example, a warning is mapped to one sound, an alert is mapped to a different sound and a too high temperature reading is mapped to yet a different sound.

Further, the processed 13 sound signals 9 and the transformed 16 and processed 13 time-sequential signals 10 may be further analyzed and classified 18 as events. For example, a worn-down grinding tool produces a characteristic sound that can be recognized by a computer and be classified 18 as an event. Such classified 18 events are then mapped 17 to an event sound stored in the database just like the other events 11.

The operator 8, being presented 12 with audio signals 6, does not have to look at a display in order to obtain information about the machine condition. Further, the audio signals 6 directly catch the operator's 8 attention, simplify keeping track of the operating condition of the machine 2 and allow the operator 8 to look at the machine 2 while listening to the audio signals 6.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

### List of reference signs

- 1: production facility
- 2: machine
- 3: microphone
- 4: other sensor
- 5: audio signal generation unit
- 6: audio signal
- 7: audio transmission unit
- 8: operator
- 9: sound signal
- 10: time-sequential signal
- 11: other event
- 12: presenting
- 13: processing
- 14: spatial sound analysis
- 15: spatial sound synthesis
- 16: transforming
- 17: mapping
- 18: classifying

## Claims

1. Method of operating a machine (2) for a production facility (1) that is adapted to produce an item, in particular a machine tool, wherein
at least one machine condition signal (9; 10; 11) characterizing an operating condition of the machine (2) is obtained,
at least one audio signal (6) representing the at least one machine condition signal (9; 10; 11) is generated and
the at least one audio signal (6) is presented (12) to an operator (8) operating the machine (2), wherein
at least one relative position in space is assigned to the at least one audio signal (6) and
the at least one audio signal (6) is presented (12) to the operator (8) such that it is deemed to emerge from the relative position in space assigned to the audio signal (6),
**characterized in that** at least one of the machine condition signals (9; 10; 11) is a time-sequential signal (10) and **in that** the audio signal (6) is generated from the time-sequential signal (10) by a transformation (16) of the time-sequential signal (10).

2. Method according to claim 1, wherein the operator (8) operates the machine (2) in dependence on the audio signals (6) presented (12) to the operator (8).

3. Method according to any one of the preceding claims, wherein the transformation (16) comprises a shift and/or scaling of the frequencies of the time-sequential signal (10).

4. Method according to any one of the preceding claims, wherein the time-sequential signal (10) is analyzed and characteristics of the time-sequential signal (10) that identify behavior of the machine (2) are transformed such that the operator (8) can more easily recognize them, e.g. amplified.

5. Method according to any of claims 1-4, wherein at least one of the machine condition signals (9; 10; 11) is analyzed and characteristic machine condition events, in particular machine condition sound events, are separated (14) from one another.

6. Method according to any of claims 1-5, wherein at least one of the machine condition signals (9; 10; 11) is analyzed and the audio signal (6) representing said machine condition signal (9; 10; 11) is chosen from a sound database, based on the result of the analysis of said machine condition signal (9; 10; 11).

7. Method according to claim 6, wherein the sound database contains a plurality of event sounds, wherein each event sound is mapped 17 to a machine operating condition, e.g., a notification, an alert, a warning or an alarm.

8. Method according to any of claims 1- 7, wherein the relative position in space assigned to the audio signal (6) corresponds to the position in space where the machine condition signal (9; 10; 11) that is represented by the audio signal (6) originates.

9. Method according to any of claims 1-8, wherein a position and/or orientation of the operator (8) is determined and the relative positions in space assigned to the audio signals (6) are chosen relative to said position and/or orientation of the operator (8).

10. Method according to any of claims 1-9, wherein one or more of the audio signals (6) are highlighted by placing their relative positions in space closer to the operator (8).

11. Method according to any of claims 1 - 10, wherein the at least one audio signal (6) is presented (12) to the operator (8) when the operator (8) is located in the vicinity of the machine (2), when the operator (8) is located at a distance from the machine (2) or when the operator (8) is located at a remote location.

12. Machine for a production facility (1) that is adapted to produce an item, in particular machine tool, comprising
at least one machine condition detection unit (3; 4) for obtaining a machine condition signal (9; 10; 11) characterizing an operating condition of the machine (2),
at least one audio signal generation unit (5) for generating an audio signal (6) representing the machine condition signal (9; 10; 11) and
at least one audio transmission unit (7) for transmitting the audio signal (6) to an operator (8) operating the machine (2), wherein
the machine (2) is adapted to be operated according to any of claims 1 - 11.

## Patentansprüche

1. Verfahren zum Betreiben einer Maschine (2) für eine Produktionsanlage (1), die zur Herstellung eines Gegenstandes eingerichtet ist, insbesondere eines Maschinenwerkzeuges, wobei
zumindest ein Maschinenzustandssignal (9; 10; 11) gewonnen wird, das einen Betriebszustand der Maschine (2) charakterisiert
zumindest ein Audiosignal (6), das das zumindest eine Maschinenzustandssignal (9; 10; 11) repräsentiert, erzeugt wird und
das zumindest eine Audiosignal (6) einem die Maschine (2) betreibenden Operator (8) präsentiert wird (12), wobei
dem mindestens einen Audiosignal (6) mindestens eine relative Position im Raum zugeordnet wird und
das mindestens eine Audiosignal (6) dem Operator (8) so präsentiert (12) wird, dass es als von der dem Audiosignal (6) zugeordneten relativen Raumposition ausgehend betrachtet wird,
**dadurch gekennzeichnet, dass** mindestens eines der Maschinenzustandssignale (9; 10; 11) ein zeitsequentielles Signal (10) ist und dass das Audiosignal (6) aus dem zeitsequentiellen Signal (10) durch eine Transformation (16) des zeitsequentiellen Signals (10) erzeugt wird.

2. Verfahren nach Anspruch 1, wobei der Operator (8) die Maschine (2) in Abhängigkeit von den dem Operator (8) präsentierten (12) Audiosignalen (6) bedient.

3. Verfahren nach einem der vorhergehenden Ansprüche, wobei die Transformation (16) eine Verschiebung und/oder Skalierung der Frequenzen des zeitsequentiellen Signals (10) umfasst.

4. Verfahren nach einem der vorhergehenden Ansprüche, bei dem das zeitsequentielle Signal (10) analysiert wird und Merkmale des zeitsequentiellen Signals (10), die das Verhalten der Maschine (2) kennzeichnen, so transformiert werden, dass der Operator (8) sie leichter erkennen kann, z.B. verstärkt.

5. Verfahren nach einem der Ansprüche 1 bis 4, wobei zumindest eines der Maschinenzustandssignale (9; 10; 11) analysiert wird und charakteristische Maschinenzustandsereignisse, insbesondere Maschinenzustandsschallereignisse, voneinander getrennt werden (14).

6. Verfahren nach einem der Ansprüche 1 bis 5, wobei zumindest eines der Maschinenzustandssignale (9; 10; 11) analysiert wird und das Audiosignal (6), das das Maschinenzustandssignal (9; 10; 11) repräsentiert, auf der Grundlage des Ergebnisses der Analyse des Maschinenzustandssignals (9; 10; 11) aus einer Tondatenbank ausgewählt wird.

7. Verfahren nach Anspruch 6, wobei die Tondatenbank eine Vielzahl von Ereignistönen enthält, wobei jeder Ereigniston einem Maschinenbetriebszustand, z. B. einer Benachrichtigung, einem Alarm, einer Warnung oder einem Alarm, zugeordnet ist.

8. Verfahren nach einem der Ansprüche 1 bis 7, wobei die dem Audiosignal (6) zugeordnete relative Position im Raum der Position im Raum entspricht, an der das durch das Audiosignal (6) repräsentierte Maschinenzustandssignal (9; 10; 11) entsteht.

9. Verfahren nach einem der Ansprüche 1 bis 8, wobei eine Position und/oder Orientierung des Operators (8) bestimmt wird und die den Audiosignalen (6) zugeordneten relativen Positionen im Raum relativ zu dieser Position und/oder Orientierung des Operators (8) gewählt werden.

10. Verfahren nach einem der Ansprüche 1 bis 9, wobei eines oder mehrere der Audiosignale (6) hervorgehoben werden, indem ihre relativen Positionen im Raum näher an den Operator (8) gebracht werden.

11. Verfahren nach einem der Ansprüche 1 bis 10, wobei das mindestens eine Audiosignal (6) dem Operator (8) präsentiert (12) wird, wenn sich der Operator (8) in der Nähe der Maschine (2) befindet, wenn sich der Operator (8) in einem Abstand von der Maschine (2) befindet oder wenn sich der Operator (8) an einem entfernten Ort befindet.

12. Maschine für eine Produktionsanlage (1), die geeignet ist, einen Gegenstand herzustellen, insbesondere ein Maschinenwerkzeug, mit
zumindest eine Maschinenzustandserfassungseinheit (3; 4) zur Erfassung eines Maschinenzustandsignals (9; 10; 11), das einen Betriebszustand der Maschine (2) charakterisiert,
zumindest eine Audiosignalerzeugungseinheit (5) zum Erzeugen eines Audiosignals (6), das das Maschinenzustandssignal (9; 10; 11) darstellt, und
zumindest eine Audioübertragungseinheit (7) zum Übertragen des Audiosignals (6) an einen Operator (8), der die Maschine (2) bedient, wobei
die Maschine (2) zum Betrieb nach einem der Ansprüche 1 bis 11 eingerichtet ist.

## Revendications

1. Procédé de fonctionnement d'une machine (2) pour une installation de production (1) qui est adaptée à la production d'un article, en particulier une machine-outil, dans lequel
au moins un signal d'état de machine (9 ; 10 ; 11) caractérisant un état de fonctionnement de la machine (2) est obtenu,
au moins un signal audio (6) représentant ledit au moins un signal d'état de machine (9 ; 10 ; 11) est généré et ledit au moins un signal audio (6) est présenté (12) à un opérateur (8) faisant fonctionner la machine (2), dans lequel
au moins une position relative dans l'espace est attribuée audit au moins un signal audio (6) et
ledit au moins un signal audio (6) est présenté (12) à l'opérateur (8) de manière à ce qu'il soit considéré comme émergeant de la position relative dans l'espace attribuée au signal audio (6),
**caractérisé en ce qu'**au moins un des signaux d'état de machine (9 ; 10 ; 11) est un signal séquentiel dans le temps (10) et **en ce que** le signal audio (6) est généré à partir du signal séquentiel dans le temps (10) par une transformation (16) du signal séquentiel dans le temps (10) .

2. Procédé selon la revendication 1, dans lequel l'opérateur (8) fait fonctionner la machine (2) en fonction des signaux audio (6) présentés (12) à l'opérateur (8).

3. Procédé selon l'une quelconque des revendications précédentes, dans lequel la transformation (16) comprend un décalage et/ou une mise à l'échelle des fréquences du signal séquentiel dans le temps (10).

4. Procédé selon l'une quelconque des revendications précédentes, dans lequel le signal séquentiel dans le temps (10) est analysé et des caractéristiques du signal séquentiel dans le temps (10) qui identifient le comportement de la machine (2) sont transformées de manière à ce que l'opérateur (8) puisse les reconnaître plus facilement, par exemple amplifiées.

5. Procédé selon l'une quelconque des revendications 1 à 4, dans lequel au moins un des signaux d'état de machine (9 ; 10 ; 11) est analysé et des événements d'état de machine caractéristiques, en particulier des événements sonores d'état de machine, sont séparés (14) les uns des autres.

6. Procédé selon l'une quelconque des revendications 1 à 5, dans lequel au moins un des signaux d'état de machine (9 ; 10 ; 11) est analysé et le signal audio (6) représentant ledit signal d'état de machine (9 ; 10 ; 11) est choisi dans une base de données de sons, sur la base du résultat de l'analyse dudit signal d'état de machine (9 ; 10 ; 11).

7. Procédé selon la revendication 6, dans lequel la base de données de sons contient une pluralité de sons d'événement, chaque son d'événement étant associé à un état de fonctionnement de la machine, par exemple une notification, une alerte, un avertissement ou une alarme.

8. Procédé selon l'une quelconque des revendications 1 à 7, dans lequel la position relative dans l'espace attribuée au signal audio (6) correspond à la position dans l'espace d'où provient le signal d'état de machine (9 ; 10 ; 11) qui est représenté par le signal audio (6).

9. Procédé selon l'une quelconque des revendications 1 à 8, dans lequel une position et/ou une orientation de l'opérateur (8) est déterminée et les positions relatives dans l'espace attribuées aux signaux audio (6) sont choisies par rapport à ladite position et/ou orientation de l'opérateur (8).

10. Procédé selon l'une quelconque des revendications 1 à 9, dans lequel un ou plusieurs des signaux audio (6) sont mis en évidence en plaçant leurs positions relatives dans l'espace plus près de l'opérateur (8).

11. Procédé selon l'une quelconque des revendications 1 à 10, dans lequel ledit au moins un signal audio (6) est présenté (12) à l'opérateur (8) lorsque celui-ci se trouve au voisinage de la machine (2), lorsque l'opérateur (8) se trouve à une certaine distance de la machine (2) ou lorsque l'opérateur (8) se trouve à un endroit éloigné.

12. Machine pour une installation de production (1) qui est adaptée à la production d'un article, en particulier une machine-outil, comprenant
au moins une unité de détection d'état de machine (3 ; 4) pour obtenir un signal d'état de machine (9 ; 10 ; 11) caractérisant un état de fonctionnement de la machine (2), au moins une unité de génération de signaux audio (5) pour générer un signal audio (6) représentant le signal d'état de machine (9 ; 10 ; 11) et
au moins une unité de transmission audio (7) pour transmettre le signal audio (6) à un opérateur (8) faisant fonctionner la machine (2), dans laquelle
la machine (2) est adaptée à fonctionner selon l'une quelconque des revendications 1 à 11.
